# EUROPEAN PATENT SPECIFICATION

(11) **EP 1 623 783 B1**
(45) Date of publication and mention of the grant of the patent: **28.05.2008**
(21) Application number: 05015663.7
(22) Date of filing: 19.07.2005
(51) Int. Cl.: B23D 59/00, B27B 9/02, B23D 55/02, B23D 49/00

(54) **Sawing machine with a tilt angle indicator**
Sägemaschine mit einer Neigungswinkelsanzeige
Machine de sciage avec indicateur d'angle d'inclinaison

(30) Priority: 04.08.2004 CN 04287106
(43) Date of publication of application: 08.02.2006
(73) Proprietor: Rexon Industrial Corp., Ltd., Tali, Taichung Hsien (TW)
(72) Inventor: Chen, Jeng-Huo, Taichung Hsien (TW)
(74) Representative: Becker Kurig Straus

(56) References cited:
- EP-A- 0 642 897
- US-A- 5 540 130
- US-A1- 2003 213 353
- US-A1- 2005 000 338

## Description

### BACKGROUND OF THE INVENTION

### 1. Field of the Invention

The present invention relates according to the preamble of claim 1 to a sawing machine. Such a sawing machine is known from US 5 540 130.

### 2. Description of the Related Art

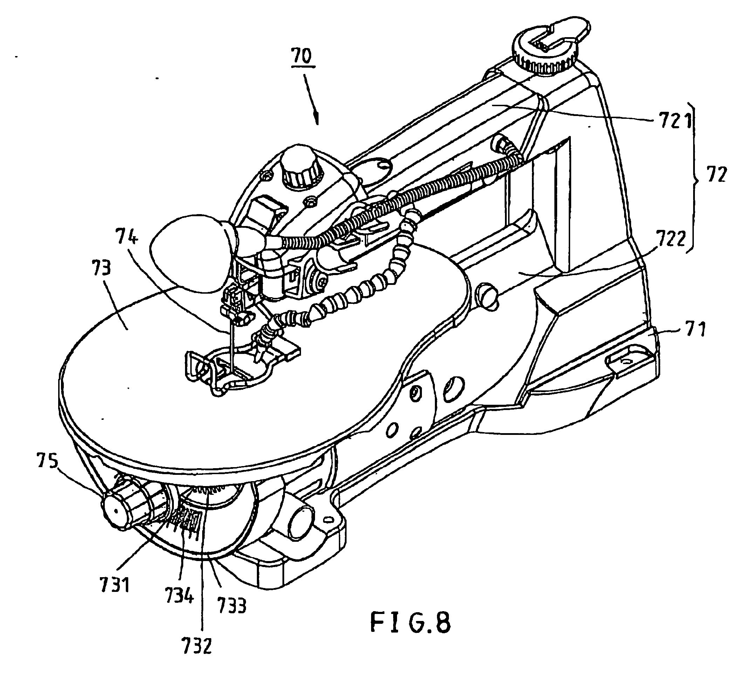

FIG. 8 shows a scroll saw **70** according to the prior art. According to this design, the scroll saw **70** comprises a bottom seat **71**, an arched suspension arm **72** formed of an upper arm member **721** and a lower arm member **722** arranged in parallel, a worktable **73** pivoted to the lower arm member **722**, and a scroll saw blade **74** connected between the free end of the upper arm member **721** and the free end of the lower arm member **722** and extended through the worktable **73**. The worktable **73** has an arched opening **731** at the bottom side on the middle, a series of teeth **732** arranged along one side of the arched opening **731**, and a scale **733** connected to the bottom wall. A rotary knob **75** is rotatably located in the arched opening **731**, having a gear (not shown) meshed with the teeth **732**. Rotating the rotary knob **75** causes the worktable **73** to tilt relative to the bottom seat **71**. Further, the scale **733** has angle-measurement graduations **734**. By means of the indication of the angle-measurement graduations **734**, the operator can accurately adjust the tilt angle of the worktable **73**.

By means of the rotary knob **75** and the indication of the angle-measurement graduations **734** of the scale **733**, the operator can conveniently and accurately adjust the tilt angle of the worktable **73**. However, because the scale **733** is provided at the bottom side of the worktable **73**, the operator cannot see the indication of the angle-measurement graduations **734** of the scale **733** from the top side of the worktable **73**. When adjusting the tilt angle of the worktable **73**, the operator may have to bend the body in order to see the indication of the angle-measurement graduations **734** of the scale **733**. Further, when tilting the worktable **73** over a predetermined angle, the rear end edge of the worktable **73** may block the indication of the angle-measurement graduations **734** of the scale **733**.

### SUMMARY OF THE INVENTION

The present invention has been accomplished under the circumstances in view. It is the primary objective of the present invention to provide a sawing machine, such as a scroll saw, band saw and the like, which enables the operator to directly see the tilt angle of the worktable from the top side of the worktable during adjustment of the worktable, thereby shortening the preparation operation before cutting.

To achieve this objective of the present invention, the sawing machine provided by the present invention as defined by claim 1 comprises a base, a worktable tiltable relative to the base, a tilt control mechanism coupled between the base and the worktable for tilting the worktable relative to the base, and a tilt angle indicator for indicating a tilt angle of the worktable. The tilt angle indicator comprises a wheel, which is pivoted to a bottom side of the worktable and has an indication zone, a spring member provided between the wheel and the worktable for providing a torsional force to the wheel, and a pull cord connected between the base and the wheel for driving the wheel to rotate when tilting the worktable relative to the base.

Further advantageous embodiments are defined by the dependent claims 2-11.

### BRIEF DESCRIPTION OF THE DRAWINGS

FIG. 1 is a perspective view of a first preferred embodiment according to the present invention.
FIG. 2 is a right side view of the first preferred embodiment according to the present invention.
FIG. 3 is a front view of the first preferred embodiment according to the present invention.
FIG. 4 is an exploded view in an enlarged scale of a part of FIG. 1, showing the structure of the tilt angle indicator.
FIG. 5 is a sectional view in an enlarged scale of a part of FIG. 4 showing the structure of the wheel of the tilt angle indicator.

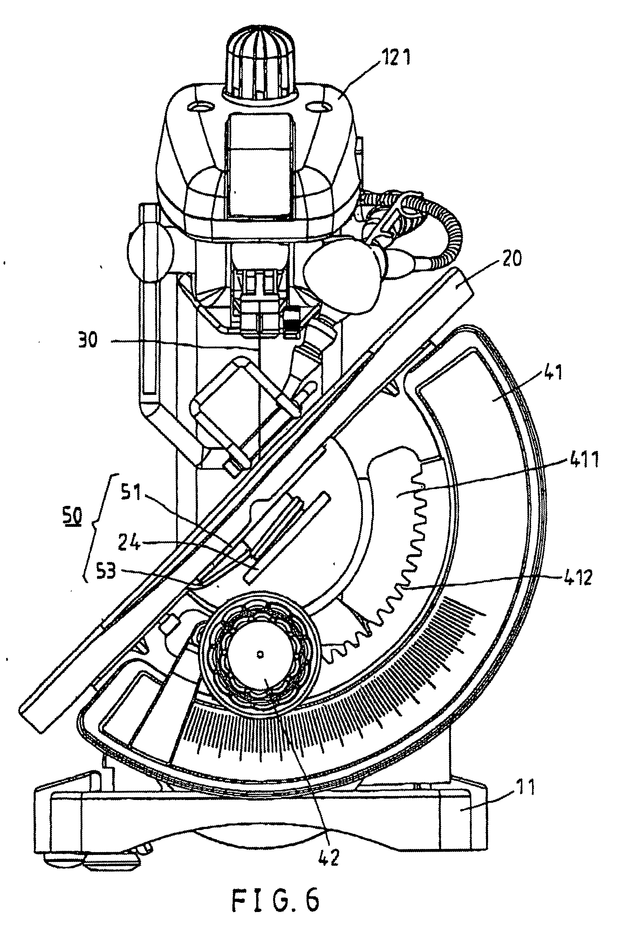

FIG. 6 is similar to FIG. 3 but showing the worktable tilted.
FIG. 7 is a front view of a second preferred embodiment according to the present invention.
FIG. 8 is a perspective view of a scroll saw according to the prior art.

### DETAILED DESCRIPTION OF THE INVENTION

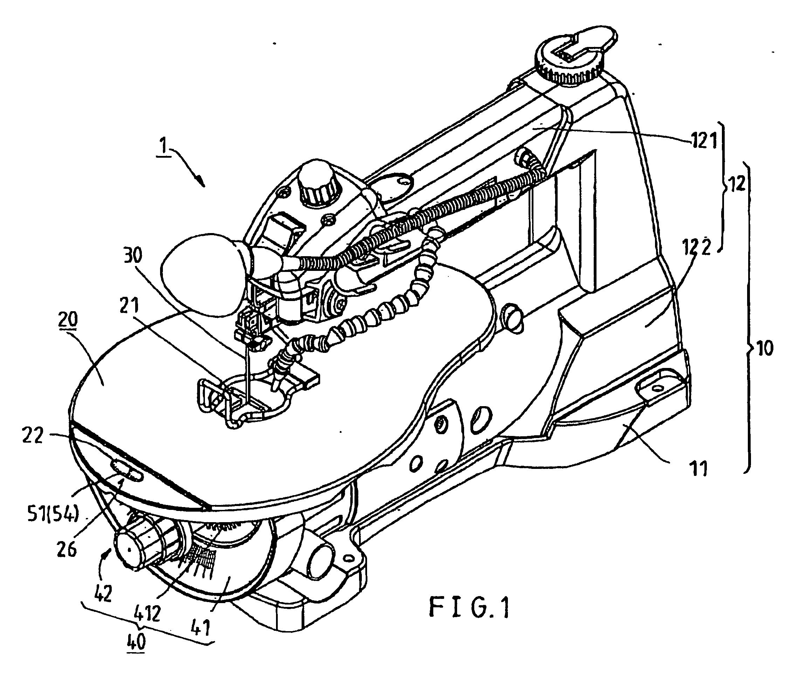

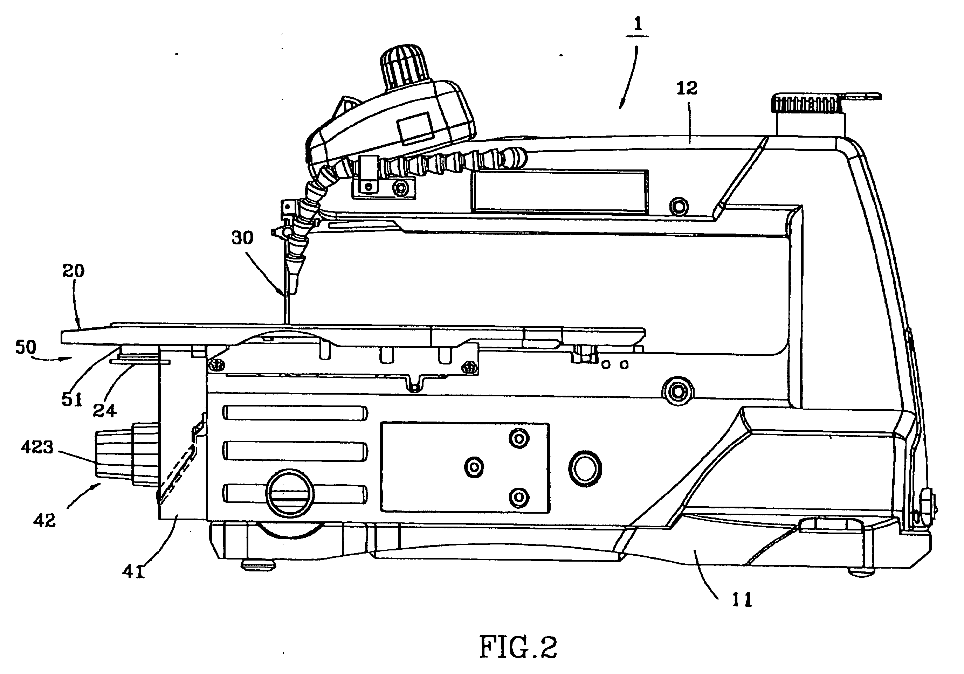

Referring to FIGS. 1 and 2, a sawing machine embodied as a scroll saw **1** in accordance with the first preferred embodiment of the present invention is shown comprised of a base **10**, a worktable **20**, a tilt control mechanism **40**, and a tilt angle indicator **50**.

The base **10** comprises a bottom seat **11** and an arched suspension arm **12** at the top side of the bottom seat **11**. The suspension arm **12** is comprised of an upper arm member **121** and a lower arm member **122** arrangement in parallel.

The worktable **20** is pivoted to the lower arm member **122**, having a slot **21** extended through the top and bottom sides thereof on the middle for the passing of a scroll saw blade **30**, and a through hole **22** near the front side. The top side of the worktable **20** is a flat surface for supporting the workpiece to be cut.

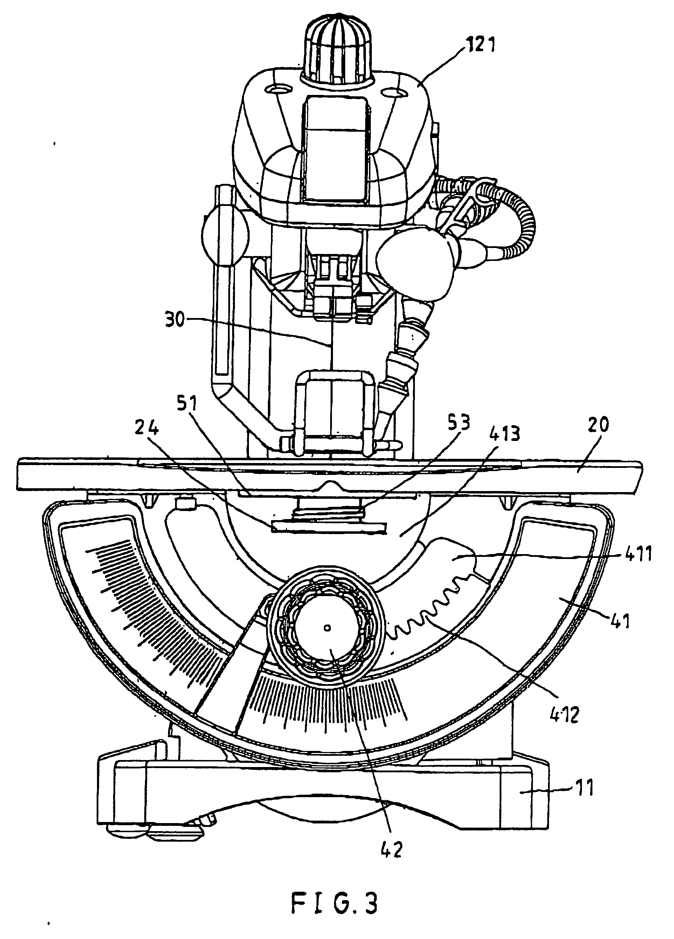

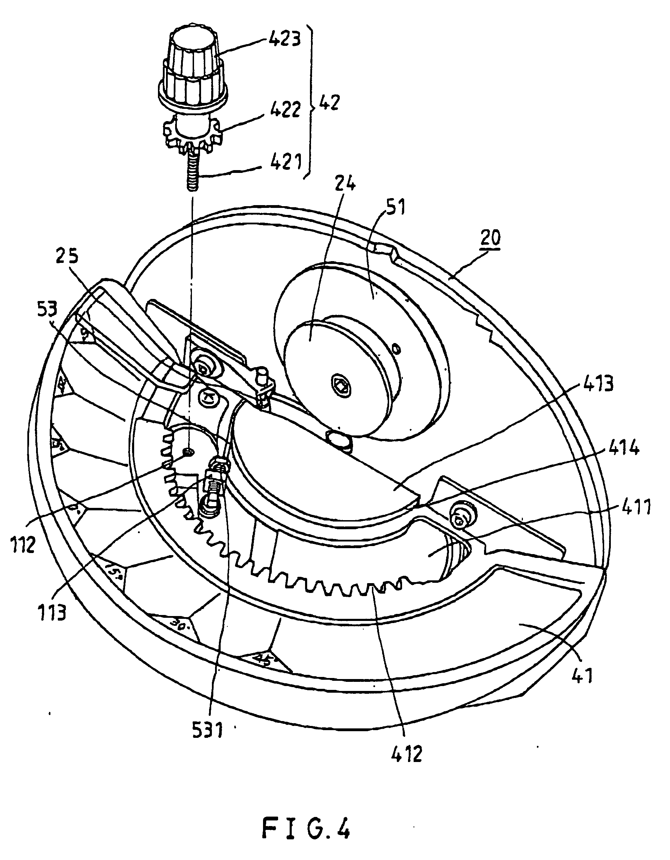

The tilt control mechanism **40** comprises a mounting plate **41** fixedly provided at the bottom side of the worktable **20** (see also FIGS. 3 and 4), and a rotary knob **42** inserted through the mounting plate **41** and pivoted to the lower arm member **122** of the base **10**. The mounting plate **41** has an arched center opening **411**, a series of teeth **412** arranged along the arched bottom side of the arched center opening **411**, a semicircular stop flange **413** spaced along the arched top side of the arched center opening **411**, and a groove **414** extended along the periphery of the semicircular stop flange **413**. The rotary knob **42** has a screw rod **421** disposed at one end and threaded into a screw hole **112** in the lower arm member **122**, a gear **422** disposed on the middle and meshed with the teeth **412** of the mounting plate **41**, and a head **423** disposed at the other end for turning by hand to adjust and position the tilt angle of the worktable **20** relative to the suspension arms **12**.

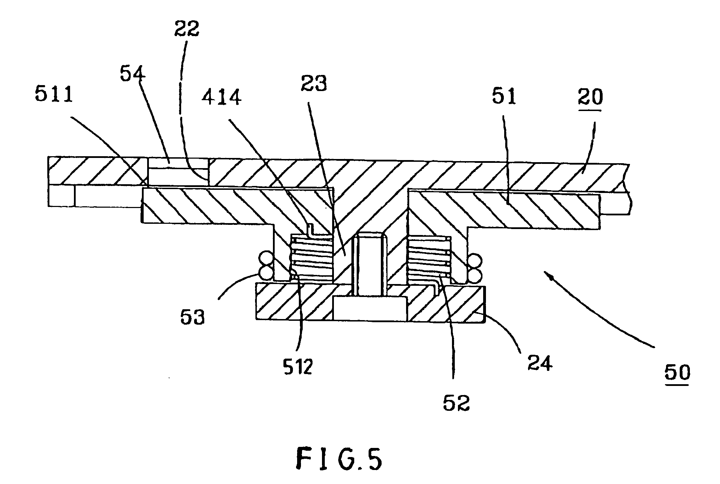

Referring to FIG. 5, the tilt angle indicator **50** comprises a wheel **51** provided at the bottom side of the worktable **20**, a spring member **52** supported between the worktable **20** and the wheel **51**, and a pull cord **53** coupled between the front side of the lower arm member **122** and the wheel **51**. The wheel **51** is pivotally coupled to a shaft **23** at the bottom side of the worktable **20.** A cap **24** is fastened to the free end of the shaft **23** to stop the wheel **51** from falling out of the shaft **23**. The wheel **51** has an indication zone **511** marked with graduations (not shown) in one side thereof below the through hole **22** of the worktable **20**. The through hole **22** is covered with a transparent covering **54** through which the operator sees the indication of the marked area **511**. The spring member **52** is received in a recessed hole **512** around the center of the wheel **51**, having two opposite ends respectively fastened to the wheel **51** and the cap **24** for producing a reversed torsional force upon rotation of the wheel **51** on the shaft **23.**

The pull cord **53** (which is a steel rope member according to the present preferred embodiment) has one end connected to the wheel **51** and the other end fastened to a locating portion **113** of the lower arm member **122** of the base **10.** When tilting the worktable **20,** the pull cord **53** is driven to turn the wheel **51** about the shaft **23** synchronously. Further, the worktable **20** has a downwardly protruded and smoothly arched bottom guider **25** for guiding movement of the pull cord **53**. In addition, the middle portion of the pull cord **53** is located in the groove **414** of the stop flange **413** of the mounting plate **41**, thereby preventing the pull cord **53** from escaping from the stop flange **413** when the pull cord **53** moves.

Therefore, when the operator adjusting the tilt angle of the worktable **20**, the wheel **51** is driven by the pull cord **53** to turn about the shaft **23**, and at the same time the operator can see the indication of the graduations of the indication zone **511** of the wheel **51** through the through hole **22,** assuring accurate tilt angle adjustment.

Further, the guider **25** can be a pulley or bearing so as to lower friction resistance during movement of the pull cord **53**, thereby smoothening tilting of the worktable **20** and rotation of the wheel **51**.

Further, an angle-indicating pointer **26** is marked on the top surface of the worktable **20** and extended from the periphery of the through hole **22** for indicating the tilt angle of the worktable **20**. Alternatively, the angle-indicating pointer **26** may be directly marked on the covering **54** to provide the same effect.

Further, an adjustment screw **531** is provided to adjustably secure one end of the pull cord **53** to the locating portion **113** of the lower arm member **122** of the base **10**. Rotating the adjustment screw **531** relatively adjusts the tension of the pull cord **53** and the angle of gyration of the wheel **51**. During adjustment, the angle-indicating pointer **26** serves as a reference line for calibration.

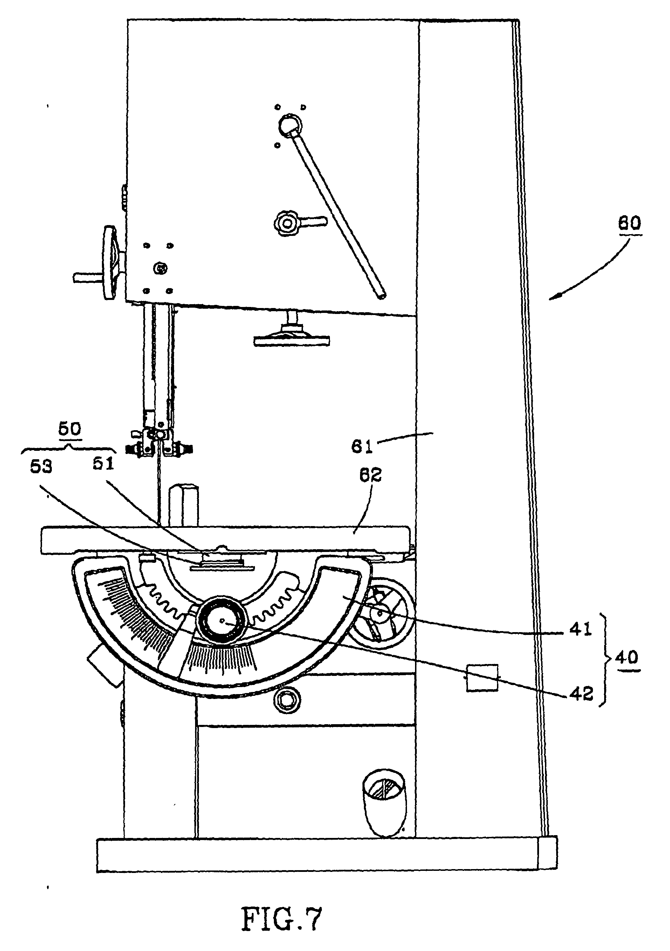

As shown in FIG. 7, a sawing machine embodied as a band saw **60** in accordance with the second preferred embodiment of the present invention comprises a bottom seat **61**, a worktable **62** tiltable relative to the bottom seat **61**, a tilt control mechanism **40** for driving the worktable **62** to tilt, and a tilt angle indicator **50** for indicating of the tilting angle of the worktable. The constructions of the tilt control mechanism **40** and the tilt angle indicator **50** are the same with the ones disclosed in the aforesaid first preferred embodiment, therefore, no detailed description thereof is necessary.

As indicated above, the sawing machine according to preferred embodiments has the following features:
1. The tilt angle indicator of the sawing machine synchronously indicates the tilt angle of the worktable during adjustment, and the operator without obstruction can clearly see the indication of the tilt angle indicator.
2. The wheel of the angle tilt angle indicator can selectively be installed in a different position subject to the model of the sawing machine.
3. The tilt angle indicator of the sawing machine has a simple structure and is inexpensive to manufacture, and can effectively improve the efficiency of the cutting operation.

Although particular embodiments of the invention have been described in detail for purposes of illustration, various modifications and enhancements may be made without departing from the scope of the invention as defined by the claims.

## Claims

1. A sawing machine comprising:
a base (10) ;
a worktable (20) tiltable relative to said base;
a tilt control mechanism (40) coupled between said base and said worktable for tilting said worktable relative to said base, and
a tilt angle indicator (50) for indicating a tilt angle of said worktable, **characterized in that** said tilt angle indicator comprises:
a wheel (51) pivoted to a bottom side of said worktable, said wheel having an indication zone (511);
a spring member (52) provided between said wheel and said worktable for providing a torsional force to said wheel; and
a pull cord (53) connected between said base and said wheel for driving said wheel to rotate when tilting said worktable relative to said base.

2. The sawing machine as claimed in claim 1, wherein said worktable (20) has a through hole (22) through which the indication zone of said wheel (51) is visible.

3. The sawing machine as claimed in claim 2, wherein said through hole (22) is covered with a transparent covering (54).

4. The sawing machine as claimed in claim 2, wherein said worktable (20) has an angle-indicating pointer (26) marked on a top surface thereof adjacent to said through hole (22).

5. The sawing machine as claimed in claim 3, wherein said transparent covering (54) has a middle part marked with an angle-indicating pointer (26).

6. The sawing machine as claimed in claim 1, wherein said worktable (20) has a downwardly extended shaft (23) to which said wheel is pivoted.

7. The sawing machine as claimed in claim 6, wherein said shaft (23) has a distal end fixedly mounted with a cap.

8. The sawing machine as claimed in claim 1, wherein said wheel (51) has a recessed portion at a center of one side thereof for accommodating said spring member (52).

9. The sawing machine as claimed in claim 1, wherein said worktable (20) further comprises a guider (25) for guiding movement of said pull cord.

10. The sawing machine as claimed in claim 9, wherein said guider (25) is a pulley.

11. The sawing machine as claimed in claim 1, wherein said indication zone (511) of said wheel is marked with graduations.

## Patentansprüche

1. Sägemaschine umfassend:
Eine Basis (10);
einen Arbeitstisch (20), der relativ zu der Basis neigbar ist;
einen Neigungssteuermechanismus (40), der zwischen der Basis und dem Arbeitstisch gekoppelt ist, um den Arbeitstisch relativ zu der Basis zu neigen; und
eine Neigungswinkelanzeigeeinrichtung (50) zum Anzeigen eines Neigungswinkels des Arbeitstisches, **dadurch gekennzeichnet, dass** die Neigungswinkelanzeigeeinrichtung umfasst:
Ein Rad (51), das drehbar an einer Unterseite des Arbeitstisches gelagert ist, wobei das Rad eine Anzeigezone (511) aufweist;
ein Federelement (52), das zwischen dem Rad und dem Arbeitstisch zum Bereitstellen einer Drehkraft auf das Rad bereitgestellt ist; und
eine Zugleine (53), die zwischen der Basis und dem Rad verbunden ist, um das Rad zum Drehen zu bringen, wenn der Arbeitstisch relativ zu der Basis geneigt wird.

2. Sägemaschine nach Anspruch 1, worin der Arbeitstisch (20) ein Durchgangsloch (22) aufweist, durch das die Anzeigezone des Rads (51) sichtbar ist.

3. Sägemaschine nach Anspruch 2, worin das Durchgangsloch (22) mit einer transparenten Abdeckung (54) abgedeckt ist.

4. Sägemaschine nach Anspruch 2, worin der Arbeitstisch (20) einen Winkelanzeiger (26) aufweist, der an einer oberen Oberfläche davon und benachbart an das Durchgangsloch (22) aufgebracht ist.

5. Sägemaschine nach Anspruch 3, worin die transparente Abdeckung (54) einen mittleren Teil aufweist, der mit einem Winkelanzeiger (26) versehen ist.

6. Sägemaschine nach Anspruch 1, worin der Arbeitstisch (20) eine nach unten gerichtete Achse (23) aufweist, an der das Rad drehbar gelagert ist.

7. Sägemaschine nach Anspruch 6, worin die Achse (23) ein distales Ende aufweist, das fest mit einer Kappe verbunden ist.

8. Sägemaschine nach Anspruch 1, worin das Rad (51) einen ausgesparten Bereich in einer Mitte einer Seite davon aufweist, um das Federelement (52) aufzunehmen.

9. Sägemaschine nach Anspruch 1, worin der Arbeitstisch (20) weiterhin eine Führung (25) umfasst, um die Bewegung der Zugleine zu führen.

10. Sägemaschine nach Anspruch 9, worin die Führung (25) eine Rolle ist.

11. Sägemaschine nach Anspruch 1, worin die Anzeigezone (511) des Rads mit Gradeinteilungen versehen ist.

## Revendications

1. Une machine de sciage comprenant :
une base (10) ;
une table de travail (20) inclinable par rapport à ladite base; un mécanisme de contrôle d'inclinaison (40) accouplé entre ladite base et ladite table de travail pour incliner ladite table de travail par rapport à ladite base, et
un indicateur d'angle d'inclinaison (50) pour indiquer un angle d'inclinaison de ladite table de travail, **caractérisé en ce que** ledit indicateur d'angle d'inclinaison comprend :
une roue (51) vissée à la surface inférieure de ladite table de travail, ladite roue comportant une zone d'indication (511) ;
un membre ressort (52) placé entre ladite roue et ladite table de travail pour fournir une force de torsion à ladite roue ; et
un câble de traction (53) connecté entre ladite base et ladite roue pour faire tourner ladite roue en inclinant ladite table de travail par rapport à ladite base.

2. La machine de sciage telle que revendiquée dans la revendication 1 dans laquelle ladite table de travail (20) comporte un regard (22) au travers duquel la zone d'indication de ladite roue est visible.

3. La machine de sciage telle que revendiquée dans la revendication 2 dans laquelle ledit regard (22) est recouvert d'un couvercle transparent (54).

4. La machine de sciage telle que revendiquée dans la revendication 2 dans laquelle dans laquelle ladite table de travail (20) comporte un indicateur d'angle d'inclinaison (26) marqué sur une surface supérieure de celle-ci, adjacent audit regard (22).

5. La machine de sciage telle que revendiquée dans la revendication 3 dans laquelle ledit couvercle transparent (54) comporte une partie médiane marqué avec un indicateur d'angle d'inclinaison (26).

6. La machine de sciage telle que revendiquée dans la revendication 1 dans laquelle dans laquelle ladite table de travail (20) comporte un arbre (23) s'étendant vers le bas auquel est vissée ladite roue.

7. La machine de sciage telle que revendiquée dans la revendication 6 dans laquelle ledit arbre (23) comporte une extrémité distante à laquelle est fixée une couronne.

8. La machine de sciage telle que revendiquée dans la revendication 1 dans laquelle ladite roue (51) comporte une portion creuse au centre de l'une de ses faces pour recevoir ledit membre ressort (52).

9. La machine de sciage telle que revendiquée dans la revendication 1 dans laquelle dans laquelle ladite table de travail (20) comprend en outre un guide (25) pour guider le mouvement du câble de traction.

10. La machine de sciage telle que revendiquée dans la revendication 9 dans laquelle ledit guide (25) est une poulie.

11. La machine de sciage telle que revendiquée dans la revendication 1 dans laquelle ladite zone d'indication (511) de ladite roue est marquée par des graduations.
